# EUROPÄISCHE PATENTSCHRIFT

(11) **EP 1 640 161 B1**
(45) Veröffentlichungstag und Bekanntmachung des Hinweises auf die Patenterteilung: **14.09.2011**
(21) Anmeldenummer: 05020317.3
(22) Anmeldetag: 17.09.2005
(51) Int. Cl.: B41F 13/004

(54) **Druckmaschinenzylinder**
Printing machine cylinder
Cylindre d'une machine à imprimer

(30) Priorität: 22.09.2004 DE 102004045832
(43) Veröffentlichungstag der Anmeldung: 29.03.2006
(73) Patentinhaber: manroland AG, 63075 Offenbach/Main (DE)
(72) Erfinder: Mayr, Peter, 86447 Todtenweis (DE)
(74) Vertreter: Epp, Matthias Heinz

(56) Entgegenhaltungen:
- DE-A1- 10 342 739
- US-A1- 2003 096 690

## Beschreibung

Die Erfindung betrifft einen Druckmaschinenzylinder gemäß dem Oberbegriff des Anspruchs 1.

Druckmaschinen verfügen über mehrere Zylinder, in die elektrisch ansteuerbare bzw. elektrisch betätigbare Einrichtungen integriert sind. Beispielhaft sei hier der Falzklappenzylinder eines Druckmaschinenfalzwerks genannt, in den elektrisch ansteuerbare bzw. betätigbare Falzklappen integriert sind. Als weiteres Beispiel sei ein Plattenzylinder eines Druckwerks einer Druckmaschine genannt, wobei in solche Plattenzylinder elektrisch ansteuerbare bzw. elektrisch betätigbare Spanneinrichtungen für Druckplatten integriert sein können.

Zur Ansteuerung bzw. Betätigung der in den Druckmaschinenzylinder integrierten Einrichtungen wird elektrische Energie bzw. ein elektrischer Strom benötigt, der von einem dem jeweiligen Druckmaschinenzylinder zugeordneten Generator erzeugt wird. Nach dem Stand der Technik wird dabei der vom Generator erzeugte, elektrische Strom über Schleifringe in den rotierenden Druckmaschinenzylinder eingeleitet, um mit dem so eingeleiteten Strom die ansteuerbaren Einrichtungen betätigen zu können. Das Einleiten von Strom über Schleifringe in rotierende Druckmaschinenzylinder verfügt über den Nachteil, dass die Schleifringe anfällig sind und daher die Zuverlässigkeit der Falzklappen bzw. Punkturen nicht gewährleistet ist. Das Einleiten von Strom in rotierende Druckmaschinenzylinder über Schleifringe ist demnach insgesamt von Nachteil.

Aus US 2003/0096690 A1 ist ein Druckmaschinenzylinder mit elektrisch betätigbaren Einrichtungen bekannt, wobei ein Generator zur Erzeugung elektrischer Energie vorgesehen ist, dessen Gehäuse mit dem Druckmaschinenzylinder fest verbunden ist sowie mit diesem rotiert und ein zugehörender Magnet drehfest mit einem Maschinengestell verbunden ist.

Hiervon ausgehend liegt der vorliegenden Erfindung das Problem zugrunde, einen neuartigen Druckmaschinenzylinder zu schaffen.

Dieses Problem wird durch einen Druckmaschinenzylinder gemäß Anspruch 1 gelöst.

Im Sinne der hier vorliegenden Erfindung wird vorgeschlagen, das Generatorgehäuse des Generators fest mit dem rotierenden Druckmaschinenzylinder zu verbinden, so dass das Generatorgehäuse zusammen mit dem Druckmaschinenzylinder rotiert. Durch die starre Verbindung des Generatorgehäuses mit dem Druckmaschinenzylinder kann der vom Generator erzeugte Strom unproblematisch in den rotierenden Druckmaschinenzylinder eingeleitet werden. Zwischen dem Generatorgehäuse und dem Druckmaschinenzylinder existiert keine Relativbewegung, so dass auf relativ zueinander bewegte Bauteile zur Stromeinleitung in den Druckmaschinenzylinder verzichtet werden kann. Hierdurch erhöht sich die Zuverlässigkeit der Stromeinleitung in den Druckmaschinenzylinder und der Generator muss weniger häufig gewartet werden.

Vorzugsweise ist die Drehzahl des Elektromotors und damit des Generatorläufers an die Drehzahl des Druckmaschinenzylinders derart anpassbar, dass der Generator einen elektrischen Strom mit gleichbleibender Frequenz erzeugt.

Nach einer vorteilhaften Weiterbildung der hier vorliegenden Erfindung ist in den Druckmaschinenzylinder mindestens eine Regel- bzw. Steuereinrichtung für die oder jede in den Druckmaschinenzylinder integrierte, ansteuerbare Einrichtung integriert, wobei die oder jede Regel- bzw. Steuereinrichtung von dem Generator mit elektrischer Energie versorgt wird, und wobei die oder jede in den Druckmaschinenzylinder integrierte Regel- bzw. Steuereinrichtung berührungslos mit einer Regel- bzw. Steuereinrichtung anderer Druckmaschinenzylinder oder mit einer zentralen Regel- bzw. Steuereinrichtung Daten austauscht.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

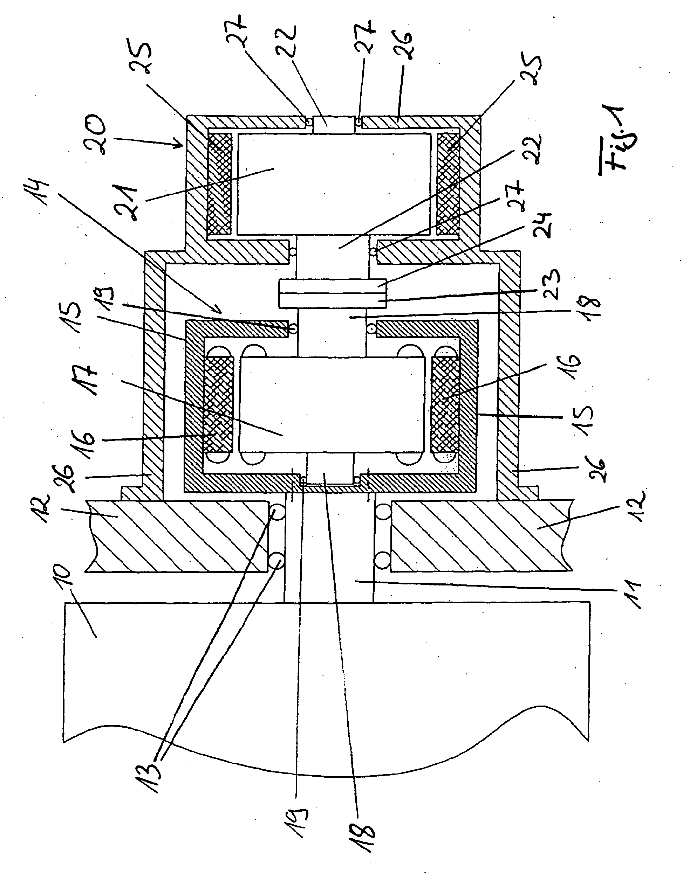

- Fig. 1:: einen schematisierten Ausschnitt aus einem erfindungsgemäßen Druckmaschinenzylinder.

Nachfolgend wird die hier vorliegende Erfindung unter Bezugnahme auf Fig. 1 in größerem Detail beschrieben. Fig. 1 zeigt ausschnittsweise einen Druckmaschinenzylinder 10, wobei eine Welle 11 des Druckmaschinenzylinders 10 an einem feststehenden Gestell 12 gelagert ist. Der Druckmaschinenzylinder 10 sowie dessen Welle 11 rotieren gegenüber dem feststehenden Gestell 12, wobei in das Gestell 12 ein Lager 13 zur Lagerung der Welle 11 des Druckmaschinenzylinders 10 integriert ist.

ln den Druckmaschinenzylinder 10 ist mindestens eine, nicht-dargestellte ansteuerbare Einrichtung integriert. ln dem Fall, in welchem der Druckmaschinenzylinder 10 als Falzklappenzylinder eines Druckmaschinenfalzwerks ausgebildet ist, sind in den Druckmaschinenzylinder mehrere als Falzklappen ausgebildete, ansteuerbare Einrichtungen integriert. Ist der Druckmaschinenzylinder 10 hingegen als Punkturnadelzylinder eines Druckmaschinenfalzwerks ausgebildet, so handelt es sich bei den in den Druckmaschinenzylinder integrierten, ansteuerbaren Einrichtungen um Punkturnadeln sowie Falzmesser. Ist hingegen der Druckmaschinenzylinder 10 als Plattenzylinder ausgebildet, so kann es sich bei den in den Druckmaschinenzylinder integrierten, ansteuerbaren Einrichtungen um ein Spannsystem für Druckplatten handeln.

Unabhängig von der konkreten Ausführung des Druckmaschinenzylinders 10 muss zur Ansteuerung bzw. Betätigung der in den Druckmaschinenzylinder 10 integrierten Einrichtungen elektrische Energie, insbesondere ein elektrischer Strom, bereitgestellt werden. Hierzu ist dem Druckmaschinenzylinder 10 ein Generator 14 zugeordnet.

lm Sinne der hier vorliegenden Erfindung wird vorgeschlagen, ein Generatorgehäuse 15 des Generators 14 fest mit der Welle 11. des Druckmaschinenzylinders 10 zu verbinden, so dass das Generatorgehäuse 15 zusammen mit dem Druckmaschinenzylinder 10 rotiert. Im Betrieb entspricht demnach die Drehzahl des Generatorgehäuses 15 der Drehzahl der Welle 11 bzw. der Drehzahl des Druckmaschinenzylinders 10. Wie Fig. 1 entnommen werden kann, sind dem fest mit der Welle 11 bzw. dem Druckmaschinenzylinder 10 verbundenem Generatorgehäuse 15 Generatorwicklungen 16 zugeordnet.

Das Generatorgehäuse 15 umschließt einen Generatorläufer 17 des Generators 14, wobei der Generatorläufer 17 relativ zum ebenfalls rotierenden Generatorgehäuse 15 rotiert. Die Drehzahl des Generatorläufers 17 ist dabei größer als die Drehzahl des Generatorgehäuses 15. Wie Fig. 1 entnommen werden kann, ist eine Welle 18 des Generatorläufers 17 über Lager 19 drehbar im Generatorgehäuse 15 gelagert.

Der Generatorläufer 17 wird von einem Elektromotor 20 angetrieben. Wie Fig. 1 zeigt, ist ein Elektromotorläufer 21 des Elektromotors 20 über eine Welle 22 mit der Welle 18 des Generatorläufers 17 gekoppelt, nämlich über entsprechende Wellenflansche 23 bzw. 24. Der Elektromotorläufer 21 ist gegenüber einem Ständer 25 des Elektromotors 20 drehbar, wobei der Ständer 25 in einem Gehäuse 26 positioniert ist. Wie Fig. 1 entnommen werden kann, ist die Welle 22 des Elektromotorläufers 21 über Lager 27 im Gehäuse 26 drehbar gelagert. Das Gehäuse 26 greift am Gestell 12 an und ist ebenso wie das Gestell 12 ortsfest ausgebildet.

Nach dem oben beschriebenen Konstruktionsprinzip treibt der Elektromotor 20 den Generatorläufer 17 an, wobei der Generatorläufer 17 gegenüber dem zusammen mit dem Druckmaschinenzylinder 10 rotierenden Generatorgehäuse 15 rotiert. Bedingt dadurch, dass die Drehzahl des Generatorläufers 17 größer ist als die Drehzahl des Generatorgehäuses 15, erzeugt der Generator 14 einen elektrischen Strom, der durch die starre Anbindung des Generatorgehäuses 15 am Druckmaschinenzylinder 10 ohne relativ zum Druckmaschinenzylinder 10 bewegte Bauelemente in denselben eingeleitet werden kann. Hierdurch ergibt sich ein wartungsfreier Generator zur Erzeugung sowie Einleitung elektrischen Stroms in den Druckmaschinenzylinder 10 zum Betätigen bzw. Ansteuern der in den Druckmaschinenzylinder 10 integrierten Einrichtungen.

Im Sinne der hier vorliegenden Erfindung wird zur Bereitstellung eines Stroms mit gleichbleibender Frequenz unabhängig von der Drehzahl des Druckmaschinenzylinders 10 und damit von der Drehzahl des Generatorgehäuses 15 vorgeschlagen, den Elektromotor 20 und damit den Generatorläufer 17 in Abhängigkeit der Drehzahl des Druckmaschinenzylinders 10 anzutreiben. Wird demnach ausgehend von einer Drehzahl die Drehzahl des Druckmaschinenzylinders 10 und damit des Generatorgehäuses 15 erhöht, so wird im Sinne der hier vorliegenden Erfindung zur Beibehaltung der Relativgeschwindigkeit bzw. Relativdrehzahl zwischen dem Generatorgehäuse 15 und dem Generatorläufer 17 die Drehzahl des Elektromotors 20 und damit des Generatorläufers 17 entsprechend erhöht. Wird hingegen die Drehzahl des Druckmaschinenzylinders 10 und damit des Generatorgehäuses 15 verringert, so wird auch die Drehzahl des Elektromotors 20 und damit des Generatorläufers 17 reduziert. Hierdurch ist es demnach möglich, einen elektrischen Strom mit gleichbleibender Frequenz bereitzustellen.

Nach einer weiteren vorteilhaften Weiterbildung der hier vorliegenden Erfindung wird vorgeschlagen, in den Druckmaschinenzylinder 10 mindestens eine Regeleinrichtung bzw. Steuereinrichtung für die oder jede ansteuerbare, in den Druckmaschinenzylinder 10 integrierte Einrichtung zu integrieren. Hierdurch ist es möglich, jeden Druckmaschinenzylinder 10 als autark arbeitenden Zylinder auszubilden.

So kann in den Druckmaschinenzylinder 10 zum Beispiel eine Regeleinrichtung integriert werden, die vom Generator 14 mit elektrischem Strom versorgt wird, und welche die Regelung bzw. Steuerung aller in den Druckmaschinenzylinder 10 integrierter Einrichtungen übernimmt. Dabei liegt es im Sinne der hier vorliegenden Erfindung, dass die in den Druckmaschinenzylinder 10 integrierte Regeleinrichtung bzw. Steuereinrichtung mit einer in einen anderen Druckmaschinenzylinder integrierten Regeleinrichtung bzw. Steuereinrichtung oder mit einer zentralen Regeleinrichtung bzw. Steuereinrichtung berührungslos Daten austauscht, wobei hierzu dann in die jeweiligen Regeleinrichtungen Mittel zum berührungslosen, vorzugsweise optischen oder elektromagnetischen, Datenaustausch integriert sind. Hierdurch ist es auf einfache Art und Weise möglich, zum Beispiel einer in den Druckmaschinenzylinder 10 integrierten Steuereinrichtung bzw. Regeleinrichtung neue Sollwerte für die Ansteuerung der in den Druckmaschinenzylinder integrierten Einrichtungen vorzugeben. So kann es sich hierbei zum Beispiel um Sollwerte für die Ansteuerung der Punkturnadeln, Falzmesser, Falzklappen oder auch Druckplattenspannsysteme handeln, abhängig davon, ob der erfindungsgemäße Druckmaschinenzylinder als Punkturnadelzylinder oder Falzklappenzylinder eines Druckmaschinenfalzwerks oder als Plattenzylinder eines Druckwerks einer Druckmaschine ausgebildet ist.

### Bezugszeichenliste

- 10: Druckmaschinenzylinder
- 11: Welle
- 12: Gestell
- 13: Lager
- 14: Generator
- 15: Generatorgehäuse
- 16: Generatorwicklung
- 17: Generatorläufer
- 18: Welle
- 19: Lager
- 20: Elektromotor
- 21: Elektromotorläufer
- 22: Welle
- 23: Wellenflansch
- 24: Wellenflansch
- 25: Ständer
- 26: Gehäuse
- 27: Lager

## Patentansprüche

1. Druckmaschinenzylinder, insbesondere Falzklappenzylinder eines Druckmaschinenfalzwerks, mit mindestens einer ansteuerbaren Einrichtung, insbesondere mit mehreren Falzklappen, und mit einem dem Druckmaschinenzylinder (10) zugeordneten Generator (14) zur Erzeugung elektrischer Energie zum Betätigen der oder jeder ansteuerbaren Einrichtung, worin ein Generatorgehäuse (15) des Generators (14) mit dem Druckmaschinenzylinder (10) fest verbunden ist und mit demselben rotiert, **dadurch gekennzeichnet, dass** ein vom Generatorgehäuse (15) umschlossener Generatorläufer (17) des Generators (14) über Lager (19) drehbar im Generatorgehäuse (15) gelagert ist und relativ zum Generatorgehäuse (15) rotiert, wobei der Generatorläufer (17) von einem Elektromotor (20) antreibbar ist.

2. Druckmaschinenzylinder nach Anspruch 1, **dadurch gekennzeichnet, dass** das Generatorgehäuse (15) mit einer Welle (11) des Druckmaschinenzylinders (10) fest verbunden ist.

3. Druckmaschinenzylinder nach Anspruch 1 oder 2, **dadurch gekennzeichnet, dass** dem Generatorgehäuse (15) Generatorwicklungen (16) zugeordnet sind, die zusammen mit dem Generatorgehäuse (15) und damit zusammen mit dem Druckmaschinenzylinder (10) rotieren.

4. Druckmaschinenzylinder nach einem oder mehreren der Ansprüche 1 bis 3, **dadurch gekennzeichnet, dass** eine Drehzahl des Elektromotors (20) und damit des Generatorläufers (17) an eine Drehzahl des Drückmaschinenzylinders (10) derart anpassbar ist, dass der Generator (14) einen elektrischen Strom mit gleichbleibender Frequenz erzeugt.

5. Druckmaschinenzylinder nach einem oder mehreren der Ansprüche 1 bis 4,
**dadurch gekennzeichnet, dass** der Generatorläufer (17) relativ zum Generatorgehäuse (15) derart rotierbar ist, dass eine Drehzahl des Generatorläufers (17) größer ist als eine Drehzahl des Generatorgehäuses (15).

6. Druckmaschinenzylinder nach einem oder mehreren der Ansprüche 1 bis 5, **dadurch gekennzeichnet, dass** in denselben mindestens eine Regeleinrichtung bzw. Steuereinrichtung für die oder jede ansteuerbare Einrichtung integriert ist.

7. Druckmaschinenzylinder nach Anspruch 6, **dadurch gekennzeichnet, dass** die oder jede Regeleinrichtung bzw. Steuereinrichtung vom Generator (14) mit elektrischer Energie versorgt wird.

8. Druckmaschinenzylinder nach Anspruch 6 oder 7, **dadurch gekennzeichnet, dass** die oder jede in den Druckmaschinenzylinder (10) integrierte Regeleinrichtung bzw. Steuereinrichtung berührungslos mit einer Regeleinrichtung bzw. Steuereinrichtung anderer Druckmaschinenzylinder oder mit einer zentralen Regeleinrichtung bzw. Steuereinrichtung Daten austauscht.

9. Druckmaschinenzylinder nach Anspruch 8, **dadurch gekennzeichnet, dass** die oder jede in den Druckmaschinenzylinder (10) integrierte Regeleinrichtung bzw. Steuereinrichtung Mittel zum berührungslosen, insbesondere optischen oder elektromagnetischen, Datenaustausch aufweist.

10. Druckmaschinenzylinder nach einem oder mehreren der Ansprüche 1 bis 9, **dadurch gekennzeichnet, dass** ein Elektromötorläufer (21) mit dem Generatorläufer (17) gekoppelt ist.

11. Druckmaschinenzylinder nach Anspruch 10, **dadurch gekennzeichnet, dass** eine Welle (22) des Elektromotorläufers (21) mit einer Welle (18) des Generatorläufers (17) gekoppelt ist.

12. Druckmaschinenzylinder nach einem oder mehreren der Ansprüche 1 bis 11, **dadurch gekennzeichnet, dass** derselbe als Falzklappenzylinder eines Druckmaschinenfalzwerks mit mehreren Falzklappen ausgebildet ist, wobei der Generator elektrische Energie zum Betätigen der Falzklappen erzeugt.

13. Druckmaschinenzylinder nach einem oder mehreren der Ansprüche 1 bis 11, **dadurch gekennzeichnet, dass** derselbe als Punkturnadelzylinder eines Druckmaschinenfalzwerks mit mehreren Punkturnadeln und Falzmessern ausgebildet ist, wobei der Generator elektrische Energie zum Betätigen der Punkturnadeln und Falzmessern erzeugt.

14. Druckmaschinenzylinder nach einem oder mehreren der Ansprüche 1 bis 11, **dadurch gekennzeichnet, dass** derselbe als Plattenzylinder eines Druckwerks mit mindestens einer Druckplattenspanneinrichtung ausgebildet ist, wobei der Generator elektrische Energie zum Betätigen der oder jeder Druckplattenspanneinrichtung erzeugt.

## Claims

1. A printing machine cylinder, in particular a folding-jaw cylinder of a printing machine folding unit, having at least one activatable device, in particular having a plurality of folding jaws, and having a generator (14) that is associated with the printing machine cylinder (10) for generating electrical energy to actuate the or each activatable device, wherein a generator housing (15) of the generator (14) is fixedly connected to the printing machine cylinder (10) and rotates with the same, **characterised in that** a generator rotor (17) of the generator (14) that is surrounded by the generator housing (15) is rotatably mounted in the generator housing (15) by way of bearings (19) and rotates in relation to the generator housing (15), wherein the generator rotor (17) can be driven by an electric motor (20).

2. A printing machine cylinder according to claim 1, **characterised in that** the generator housing (15) is fixedly connected to a shaft (11) of the printing machine cylinder (10).

3. A printing machine cylinder according to claim 1 or 2, **characterised in that** associated with the generator housing (15) there are generator windings (16) which rotate together with the generator housing (15) and thus together with the printing machine cylinder (10).

4. A printing machine cylinder according to one or more of claims 1 to 3, **characterised in that** a rotational speed of the electric motor (20) and thus of the generator rotor (17) can be adapted to a rotational speed of the printing machine cylinder (10) in such a way that the generator (14) generates an electric current with constant frequency.

5. A printing machine cylinder according to one or more of claims 1 to 4, **characterised in that** the generator rotor (17) can be rotated in relation to the generator housing (15) in such a way that a rotational speed of the generator rotor (17) is greater than a rotational speed of the generator housing (15).

6. A printing machine cylinder according to one or more of claims 1 to 5, **characterised in that** integrated in the same there is at least one closed-loop or open-loop control device for the or each activatable device.

7. A printing machine cylinder according to claim 6, **characterised in that** the or each closed-loop or open-loop control device is supplied with electrical energy by the generator (14).

8. A printing machine cylinder according to claim 6 or 7, **characterised in that** the or each closed-loop or open-loop control device that is integrated in the printing machine cylinder (10) contactlessly exchanges data with a closed-loop or open-loop control device of other printing machine cylinders or with a central closed-loop or open-loop control device.

9. A printing machine cylinder according to claim 8, **characterised in that** the or each closed-loop or open-loop control device that is integrated in the printing machine cylinder (10) has means for contactless, in particular optical or electromagnetic, data exchange.

10. A printing machine cylinder according to one or more of claims 1 to 9, **characterised in that** an electric motor rotor (21) is coupled to the generator rotor (17).

11. A printing machine cylinder according to claim 10, **characterised in that** a shaft (22) of the electric motor rotor (21) is coupled to a shaft (18) of the generator rotor (17).

12. A printing machine cylinder according to one or more of claims 1 to 11, **characterised in that** the same is formed as a folding jaw cylinder of a printing machine folding unit having a plurality of folding jaws, wherein the generator generates electrical energy to actuate the folding jaws.

13. A printing machine cylinder according to one or more of claims 1 to 11, **characterised in that** the same is formed as a pin cylinder of a printing machine folding unit having a plurality of pins and folding blades, wherein the generator generates electrical energy to actuate the pins and folding blades.

14. A printing machine cylinder according to one or more of claims 1 to 11, **characterised in that** the same is formed as a plate cylinder of a printing unit having at least one printing plate clamping device, wherein the generator generates electrical energy to actuate the or each printing plate clamping device.

## Revendications

1. Cylindre de machine à imprimer, notamment cylindre plieur à volets d'un groupe de pliage de machine d'impression comportant au moins une installation commandée ayant notamment plusieurs volets de pliage et un générateur (14) associé au cylindre de machine d'impression (10) pour générer l'énergie électrique pour actionner la ou chaque installation commandée,
- un boîtier (15) du générateur (14) étant relié solidairement au cylindre de machine d'impression (10) et il tourne avec celui-ci,
cylindre de machine d'impression **caractérisé en ce que**
le rotor (17) du générateur (14) entouré par le boîtier (15) du générateur est monté par des paliers (19) à rotation dans le boîtier (15) et il tourne par rapport au boîtier (15) du générateur,
* le rotor (17) du générateur étant entraîné par un moteur électrique (20).

2. Cylindre de machine d'impression selon la revendication 1,
**caractérisé en ce que**
le boîtier (15) du générateur est relié solidairement à l'arbre (11) du cylindre de machine d'impression (10).

3. Cylindre de machine d'impression selon l'une des revendications 1 ou 2,
**caractérisé en ce que**
des enroulements de générateur (16) sont associés au boîtier (15) du générateur, ces enroulements tournant avec le boîtier de générateur (15) et ainsi avec le cylindre de machine d'impression (10).

4. Cylindre de machine d'impression selon l'une ou plusieurs des revendications 1 à 3,
**caractérisé en ce que**
la vitesse de rotation du moteur électrique (20) et ainsi celle du rotor (17) du générateur sont adaptées à la vitesse de rotation du cylindre de machine d'impression (10) de façon que le générateur (14) génère un courant électrique de fréquence constante.

5. Cylindre de machine d'impression selon l'une ou plusieurs des revendications 1 à 4,
**caractérisé en ce que**
le rotor de générateur (17) tourne par rapport au boîtier (15) du générateur de façon que la vitesse de rotation du rotor (17) soit supérieure à la vitesse de rotation du boîtier (15) du générateur.

6. Cylindre de machine d'impression selon l'une ou plusieurs des revendications 1 à 5,
**caractérisé par**
une installation de régulation ou de commande intégrée pour la ou pour chaque installation commandée.

7. Cylindre de machine d'impression selon la revendication 6,
**caractérisé en ce que**
la ou chaque installation de régulation ou installation de commande est alimentée en énergie électrique par le générateur (14).

8. Cylindre de machine d'impression selon les revendications 6 ou 7,
**caractérisé en ce que**
la ou chaque installation de régulation ou installation de commande intégrée dans le cylindre de machine d'impression (10) échange sans contact des données avec une installation de régulation ou une installation de commande d'autres cylindres de machine d'impression ou avec une installation ou une installation de commande, centrale.

9. Cylindre de machine d'impression selon la revendication 8,
**caractérisé en ce que**
la ou chaque installation de régulation ou installation de commande intégrée dans le cylindre de machine d'impression (10) comporte des moyens pour échanger des données, sans contact, notamment des moyens optiques ou électromagnétiques.

10. Cylindre de machine d'impression selon l'une ou plusieurs des revendications 1 à 9,
**caractérisé en ce qu'**
un rotor de moteur électrique (21) est couplé au rotor (17) du générateur.

11. Cylindre de machine d'impression selon la revendication 10,
**caractérisé en ce que**
l'arbre (22) du rotor (21) du moteur électrique est couplé à l'arbre (18) du rotor (17) du générateur.

12. Cylindre de machine d'impression selon l'une ou plusieurs des revendications 1 à 11,
**caractérisé en ce qu'**
il est réalisé comme cylindre plieur à volets d'un groupe de pliage de machine d'impression comportant plusieurs volets de pliage,
* le générateur fournissant l'énergie électrique pour actionner les volets de pliage.

13. Cylindre de machine d'impression selon l'une ou plusieurs des revendications 1 à 11,
**caractérisé en ce qu'**
il est réalisé comme cylindre à aiguilles de poinçonnement d'un groupe de pliage de machine d'impression ayant plusieurs aiguilles de poinçonnement et des couteaux de pliage,
* le générateur fournissant l'énergie électrique pour actionner les aiguilles de poinçonnement et les couteaux de pliage.

14. Cylindre de machine d'impression selon l'une ou plusieurs des revendications 1 à 11,
**caractérisé en ce qu'**
il est réalisé en même temps comme cylindre porte-plaques d'un groupe d'impression ayant au moins une installation de serrage de plaque d'impression,
* le générateur fournissant l'énergie électrique pour actionner la ou chaque installation de serrage de plaque d'impression.
